# EUROPEAN PATENT SPECIFICATION

(11) **EP 2 341 864 B1**
(45) Date of publication and mention of the grant of the patent: **22.08.2012**
(21) Application number: 09816879.2
(22) Date of filing: 25.09.2009
(51) Int. Cl.: A61C 5/06, A61C 9/00

(54) **DEVICE FOR SUPPLYING A DENTAL RETRACTION CORD**
VORRICHTUNG ZUR AUSGABE EINER ZAHNFLEISCHRETRAKTIONSSCHNUR
DISTRIBUTEUR D'UN FIL DE RETRACTION DENTAIRE

(30) Priority: 26.09.2008 GB 0817588
(43) Date of publication of application: 13.07.2011
(73) Proprietor: 3M Innovative Properties Company, Saint Paul, MN 55133-3427 (US)
(72) Inventor: WALTER, Alexander, D-82229 Seefeld (DE); PEUKER, Marc, D-82229 Seefeld (DE); HAMPE, Rüdiger, D-82229 Seefeld (DE); BERTL, Mathias, D-82229 Seefeld (DE)
(74) Representative: Hohmann, Arno
(86) International application number: PCT/US2009/058284
(87) International publication number: WO 2010/036838

(56) References cited:
- WO-A1-96/04954
- DE-U1- 20 202 733
- US-A- 4 930 920
- US-A- 5 692 610

## Description

### Field of the Invention

The invention relates to a device for supplying a dental retraction cord.

### Background of the Invention

The restoration of a patient's tooth or teeth often includes the replacement of natural tooth structure by a manufactured dental restoration or dental prosthesis. Typically a tooth that is to be restored is first prepared by a dentist, for example by being abraded or ground to an appropriate shape to remove undesired or diseased tooth substance, and to provide the tooth with a shape appropriate to receive the dental restoration.

The dental restoration is typically mated precisely with the remaining tooth shape prepared by the dentist on the basis of an impression of the prepared tooth. Therefore the dental impression should be very precise, and should represent all tooth structure required to determine the shape of the mating surface of the dental restoration to be attached. In particular the dental impression should represent the transition or the "margin" between the shape prepared in a tooth and the natural tooth shape. For dental restorations that extend below a patient's gingiva (or gums) the dentist also should make the part of the margin that would normally be covered by the gingiva accessible for the dental impression. The procedure of displacing the gingiva from the tooth to make the margin accessible is also known as "gingival retraction" in the field of dentistry. A common gingival retraction procedure includes the insertion of a so-called retraction cord in the gingival sulcus (opening) by use of an appropriate dental instrument, for example by a Heinemann spatula.

WO-A-96 04 954 discloses a device for applying an implant material in the form of a fibre into a body. The device has a housing with a bobbin onto which the implant material is wound. The device further comprises a cannula. One end of the implant material is guided through the cannula and through the outlet orifice of the cannula. The implant material in the form of a fibre can be applied together with a fluid stored in the housing. The implant material, when applied into a body, is supposed to form a coherent, open-pore structure in the form of a ball of fibre. The device formed by the housing and the cannula can be a syringe needle, a catheter or an endoscope tube. WO-A-99 13 781 discloses a device for applying an implant material in the form of a fibre into a body. The device has a housing containing a fluid and a bobbin onto which the implant material is wound. The device further comprises a cannula. One end of the implant material is guided through the cannula and through the outlet orifice of the cannula. The cannula has a narrowed portion, such that when the implant material in the form of a fibre is dispensed by generating a static pressure onto the fluid using a piston, the fluid remains in the container. The implant material, when applied into a body, is supposed to form a coherent, open-pore structure in the form of a ball of fibre. DE-U-202 02 733 describes a container including a retraction fluid and a retraction cord. One end of the retraction cord is guided through the opening of the container, such that the user may cut a desired length of the retraction cord.

### Summary of the invention

The invention relates to a device for supplying a dental retraction cord, the device comprising a container, which comprises a dental substance, a cannula for dispensing the dental substance and a dental retraction cord being at least partially disposed within the cannula so that the dental retraction cord is entrained by the dental substance dispensed through the cannula.

The invention is advantageous in that it facilitates layin a dental retraction cord into a gingival sulcus in a patient's mouth. The invention provides for laying the cord in a positional controlled manner, and therefore reduces the need for repositioning the cord by a user. Further the invention provides for the flexibility of the cord to be maintained during storage, and during use, because the cord is wetted by the dental substance. The dental substance also provides for the dental retraction cord to slightly adhere at surfaces, such as a tooth or a gingiva, so that the cord, once positioned, remains or is retained in position. The invention is further advantageous in that it provides for a gingival retraction procedure that is relatively acceptable for the patient and convenient for the dental professional. Further the invention helps to reduce costs in manufacturing of the device for supplying a dental retraction cord, and costs and time necessary for performing the gingival retraction procedure.

The container and the cannula are preferably connectable. Further the device is preferably adapted to force or to displace the dental substance from the container towards the cannula. The device of the invention comprises, for example, a piston which is movable into the container to extrude the dental substance from the container. Examples of suitable devices are syringes, cartridges or capsules. Alternatively the container is deformable. In this case the container is deformed or compressed to displace the dental substance from the container towards the cannula. Examples of suitable deformable device are tubes, or pouches.

In another embodiment the container and the cannula are connected with one another. The cannula and the container are for example, formed as one piece. Forming as one piece may particularly include co-injection molding of the cannula and the container. Thus the cannula and the container are made of a single or at least two different plastic materials. For example the cannula is made of a softer material than the container to reduce the risk of damage to adjacent tissue when used in a patient's mouth.

In one embodiment the cannula has a free end formed byl a cannula wall which is reduced in thickness relative to an adjacent portion of the cannula. Thus, flexibility of the free end relative to the remainder of the cannula is provided. A reduced thickness includes tapered portions of the cannula wall, for example a portion tapering towards the end of the free end of the cannula. Embodiments of the cannula have a constricted outer dimension, or a widened inner dimension in the area of reduced wall thickness, or a combination of both. The cannula therefore has an overall stiffness that is sufficient to support the free end in use in a patient's mouth. On the other hand the free end itself is elastic relative to the remainder of the cannula. The elasticity of the free end helps the free end to better conform to narrow spaces in a patient's mouth, and avoids damage when used on relatively sensitive tissue (for example the gingival sulcus). The taper or reduction further provides for a reduced dimension of the free end that particularly allows the free end to be inserted in such narrow spaces in a patient's mouth, for example in a patient's gingival sulcus.

In still another embodiment the cannula has a front face which transitions smoothly, preferably with a radius, towards the lateral inside and outside surfaces of the cannula. This also makes the free end more easily usable on relatively sensitive tissue in the patient's mouth, and lower the risk of causing damage.

In a further embodiment the cannula has a free end having a protrusion for insertion of a dental retraction cord into a patient's gingival sulcus. The cannula may also have a free end having a front face which is beveled with respect to one or more of the major lateral surfaces of the cannula, such as the inside lateral surface or the outside lateral surface. The bevel of the front face preferably excludes an angle of about 90 degrees. The front face is for example generally flat and inclined relative to a longitudinal axis along which the cannula extends. The free end of the cannula may also be configured generally hemispherical. Such a configuration is particularly advantageous to achieve a gentle interaction between the free end of the cannula and the gingival tissue in a patient's mouth. Further the cannula may have an elastic free end initially closed by constriction of the cannula wall, and expandable by forcing the dental retraction cord through the constriction. Again the reduced dimension allows the free end to be inserted in narrow spaces in a patient's mouth, and the elasticity of the free end helps the free end to better conform to certain situations and avoid injuries. On the other hand the constriction forms a self-opening system which initially closes the cannula, but opens as dental substance is dispensed. Further the constriction closes a space between the dental retraction cord and the free end of the cannula when the cord has moved in the constriction, and therefore provides for the cord to be relatively reliably entrained because the dental substance is restrained between the cord and the cannula wall as it is dispensed. The constriction also hinders air in penetrating the device through the cannula, and thus prevents the dental substance from curing or solidifying.

In an embodiment of the invention the cannula is at least at its free end comprised of a plastic material selected from the group of polypropylene, polyethylene, polyamide, polycarbonate, polymethyl methacrylate, polyoxymethylene, acrylonitrile-butadiene-styrene terpolymer, polybutadiene terephthalate, polyethylene terephthalate, polyisoprene and blends thereof. The mentioned plastic materials may be fiber or particle reinforced, for example carbon fiber or glass fiber reinforced. The cannula may be substantially entirely comprised of such plastic material. The cannula and/or the free end may also be comprised of metal, for example a stainless steel. Further the cannula may be comprised of at least two different materials. For example, the cannula is comprised of at least two plastic materials, or a plastic material combined with metal. The free end may further comprise outer structures (for example a coat) of an elastomeric material. Such elastic material may be a thermoplastic elastomer, for example a thermoplastic polyurethane, or styrene-butadiene-styrene block copolymer. The elastic material may also be a thermosetting elastomer, like a rubber, or a silicone, for example.

In one embodiment the dental retraction cord is flexible, and may be compressed, wound, bunched, coiled, or otherwise gathered. The dental retraction cord is in a dimension laterally of its length greater than at least an outlet of the cannula. This allows for example, the dental retraction cord to be pulled from the device independent from dispensation of any dental substance. As an advantage a user may lay the dental retraction cord towards the gingival sulcus in a patient's mouth by just pulling the device along or around the tooth/gingival interface.

The dental retraction cord may in a dimension laterally of its length further be generally equal to at least an outlet of the cannula. Therefore the dental retraction cord abuts inner walls of the cannula so that a certain pressure is needed to force the dental substance between the dental retraction cord and the inner walls of the cannula. Such pressure provides for the dental retraction cord to be compressed in a dimension laterally of its length so that it can be entrained by the dental substance relatively easily, but in the absence of that pressure the dental retraction cord is retained in the cannula because of friction between the cord and the inner walls of the cannula. This is advantageous in that the dispensation of the dental retraction cord to a desired location may be controlled relatively precisely, and unintentional dispensation of the dental retraction cord and/or the dental substance is prevented. Further the device allows tightening of the dental retraction cord during application, or removing the cord from a location by just moving the device away from that location, for example in case a relocation of a portion of the cord is desired.

In one embodiment the dental retraction cord is comprised of cotton. The dental retraction cord may further be comprised of a plastic material, for example, a thermoplastic polyurethane, or a silicone. The plastic material may be elastic, for example made of a foamed plastic material, or it may be made of a naturally elastomeric material, or both.

In a further embodiment the dental retraction cord comprises at least one predetermined separation zone, for example a perforation or a weakened portion. Thus the dental retraction cord is adapted to be torn apart to separate a portion of the cord from the remainder of the cord. Thereby the device of the invention provides for toolless separation of portions of the dental retraction cord.

In a preferred embodiment a part of the dental retraction cord is accommodated in the container with another part extending into the cannula. For example in a new or unused device a part of the dental retraction cord already extends into the cannula so that the cord is dispensed from the device substantially without the dental substance pre-flowing. A part of the dental retraction cord may, for example in use of the device, project from the cannula with another part being accommodated in the cannula. In this case a further part of the dental retraction cord may be accommodated in the container.

In another embodiment the dental retraction cord is arranged on the piston, for example helically wound or coiled around the piston. The piston, for example, has a portion having a reduced diameter with respect to a lateral surface of the piston sealing with the container. Such a reduced portion may be arranged at a front end of the piston (which is the end typically oriented toward the dental substance in the container), and may receive the dental retraction cord. The reduced portion is a pin, or reel shaped structure, for example. The piston may also have a recess for accommodating some or all of the dental retraction cord. The recess extends for example from the piston front end into the piston.

In another embodiment the dental retraction cord is coiled (for example helically coiled) adjacent or on inner walls of the container. The dental retraction cord may further be disposed arbitrarily within the container, preferably without touching the piston. It has been found that with the dental retraction cord being arbitrarily disposed within the container a non-contact relationship between the dental retraction cord and the piston helps to prevent the cord from tangling.

In one embodiment the dental retraction cord is fed through the piston, with the piston spacing a portion of the dental retraction cord from an inside wall of the container. For example the dental retraction cord is not entirely accommodated within the container. Thus adverse interactions (for example during storage) between the dental retraction cord and dental substance stored in the container are avoided for the portion of the cord located outside the container. The dental retraction cord may also have a leader portion which is more resistant to the dental substance that may cause such adverse interactions.

The material of the dental retraction cord may be compatible with the dental substance, for example is substantially inert relative to the dental substance.

The dental substance may be adapted to solidify, for example to harden or to cure. Further the dental substance comprises at least one of a hemostatic, an astringent, an anaesthetic, and/or an antimicrobial agent. The dental substance is water soluble, a suspension, or a polymer solution, for example. The dental substance may further comprise at least one of sodium alginate, calcium alginate, potassic alginate, and hydrogel. The dental substance may have a viscosity of between about I mPas and about 1000 Pas, in more particular between about 10 Pas and about 500 Pas, preferably between 50 Pas and 500 Pas.

In one embodiment the device of the invention comprises a tip part which comprises the dental retraction cord and, separate therefrom, a delivery part containing the dental substance. The tip part and the delivery part are preferably connectable for bringing the dental retraction cord into contact with the dental substance. The tip part comprises a coupling for mating with a coupling of the delivery part. The dental retraction cord is sealed within the tip part. For example the tip part comprises a cannula at a front end and a container at a rear end. The container comprises the dental retraction cord with a portion of the dental retraction cord extending in the cannula. The container further comprises the coupling adjacent the rear end. The rear end of the container is sealed, for example by a sealing film of foil. The cannula may be sealed by a closure, for example a closure cap. Thus the dental retraction cord may be hermetically sealed in the tip part. The dental retraction cord is therefore protected from environmental conditions, for example during storage, and is also kept separate from the dental substance until shortly before use. Further such an embodiment allows for providing different dental retraction cords within different tip parts. Such an embodiment also allows for providing different dental substances within different delivery parts. The different delivery parts may thus be combined with different tip parts. Therefore a delivery part may be used with multiple tip parts of the same type or different tip parts. For example a re-usable delivery part is used with several similar or different disposable tip parts, or a disposable delivery part is used with a tip part selected from multiple different tip parts. Further different delivery parts may be used with one tip part. Tip parts of the same type may also be used with different delivery parts. Therefore a product is provided which can be user-adapted, for example according to a desired use.

### Brief description of the Figures

- Fig. 1: is a cross-sectional view of a device for supplying a dental retraction cord according to an embodiment of the invention;
- Fig. 1A: is a detail view of the cannula of Fig. 1;
- Fig. 2: is a cross-sectional view of another device for supplying a dental retraction cord according to an embodiment of the invention;
- Fig. 3: is a cross-sectional view of still another device for supplying a dental retraction cord according to an embodiment of the invention;
- Fig. 4: is a cross-sectional view of a further device for supplying a dental retraction cord according to an embodiment of the invention;
- Fig. 5: is a cross-sectional view of another device for supplying a dental retraction according to an embodiment of the invention;
- Fig. 5A: is a detail view of a portion of the piston of Fig. 5
- Fig. 6, 7: are cross-sectional views of an alternative device for supplying a dental retraction cord according to an embodiment of the invention;
- Fig. 8: is a perspective view of a tooth in a patient's mouth to which a dental retraction cord is applied by use of a device according to an embodiment of the invention;
- Figs. 9-13: are views of differently shaped free end of cannulas according to embodiments of the invention;
- Fig. 14A, 14B: are views of an alternatively configured free end of a cannula according to an embodiment of the invention;
- Figs. 15A, 15B: are views of a generally ball shaped free end of a cannula according to an embodiment of the invention;
- Fig. 16: is a view of a dental retraction cord having a non-uniform cross-section over its length according to an embodiment of the invention;
- Figs. 17, 17A: are views of a device illustrating an embodiment of a cannula that has an inner configuration according to an embodiment of the invention;
- Figs. 18A-18E: are views of structures that may be used with the inner configuration shown in Fig. 17A;
- Fig. 19: is a perspective view of an alternative device according to an embodiment the invention; and
- Fig. 20: is a perspective view of a dental retraction cord according to an embodiment of the invention.

### Detailed description of the Figure

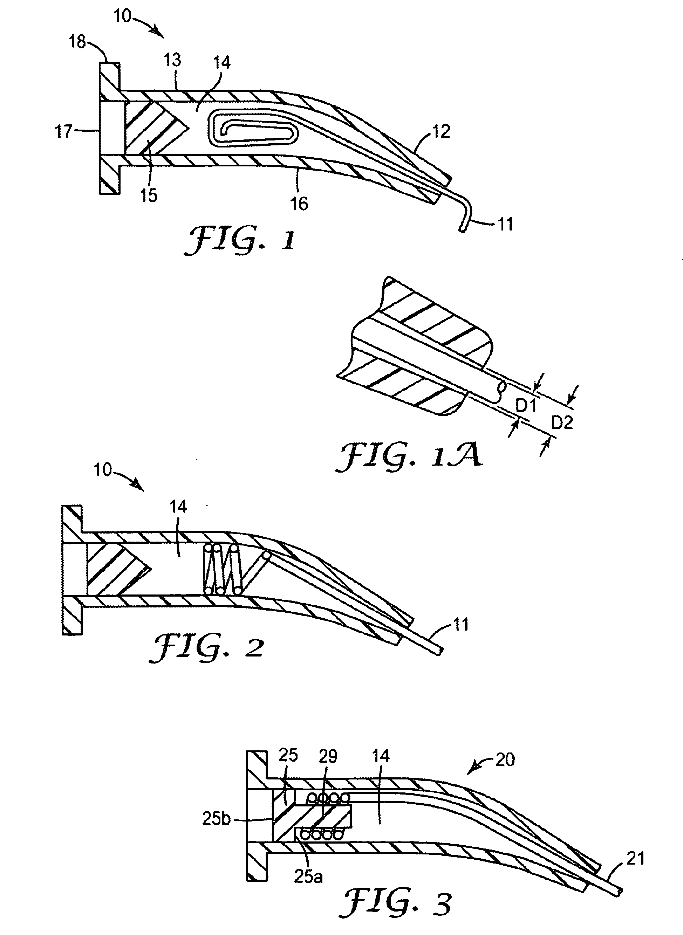

Fig. 1 shows a capsule 10 for supplying a dental retraction cord 11. The capsule 10 has a cannula 12 and a container 13, which in this example are formed as one piece. The container 13 has a reservoir 14 for receiving a dental substance. The reservoir 14 at a front end 16 opens into the cannula 12, and at a rear end 17 is closed by a piston 15. The piston 15 is movable towards the front end 16 to extrude dental substance received in the reservoir 14. The capsule 10 further has an annular rim 18 for engaging the capsule with an applicator device (not shown), for example one available under the designation "Capsule Dispenser" from the company 3M ESPE AG, Germany. Such an applicator device has a plunger which for example by actuating a lever, can be manually urged forward to move the piston 15 and dispense the contents of the reservoir. The dental retraction cord 11 is disposed in the reservoir 14 of the container 13, and one end extends into the cannula 12. Movement of the piston 15 towards the front end 16 causes the dental substance to flow towards the cannula 12, and as the dental substance flows through the cannula 12 it entrains the dental retraction cord 11 so that both are dispensed from the cannula together. It is possible that the cord is dispensed prior to the material, or that the material is dispensed prior to the cord, but it is preferably that they emerge together.

The outer cross-sectional dimension of the dental retraction cord may be smaller than the inner cross-sectional dimension of the cannula. Thus, an annular space is left between the cord and the inside of the cannula which allows dental substance to flow through the cannula, to entrain the dental retraction cord. Thereby the dental retraction cord is preferably dispensed from the cannula surrounded by the dental substance. In other words the dental retraction cord preferably obtains (or is coaxially contained within) a coating of dental substance as it is dispensed from the cannula. This is advantageous in that the dental substance at the outside of the dental retraction cords makes the cord sufficiently adherent so that it can be posted to a surface, for example for pre-positioning of the dental retraction cord.

Three possible relationships between the inner cannula dimension and the outer dimension of dental retraction cord are illustrated in Fig. 1A and specified by example in the following table.

| | **D1** (diameter of uncompressed cord) | **D1*** (diameter of compressed cord) | **D2** |
|---|---|---|---|
| Example 1 | 0,64 mm | 0,15 mm | 0,75 mm |
| Example 2 | 1,00 mm | 0,30 mm | 0,75 mm |
| Example 3 | 1,38 mm | 0,65 mm | 0,75 mm |

In the example the inside of the cannula has a generally circular cross-section, and has a diameter D2. The dental retraction cord also has a generally circular cross-section, and has an outside diameter D1. D1 is smaller than D2.

The diameter D1 in the example is the nominal diameter. The dental retraction cord is compressible in diameter and the nominal diameter refers to the diameter of the generally uncompressed dental retraction cord.

A compressible dental retraction cord may have an outer cross-sectional dimension that is greater than the inner cross-sectional dimension of the cannula. Such dental retraction cord is preferably permeable to the dental substance. Therefore dental substance forced through the dental retraction cord in the cannula may cause the cord to be entrained along with the dental substance. In other words, some of the dental material is adjacent to the cord, and some is within the interior of the cord if its construction permits it.

A dental retraction cord as used with the present invention is available under the designation Ultrapak #000, Ultrapak #1, or Ultrapak #3 from the company Ultradent Products, Inc., South South Jordan, UT, USA. Other options are the products available under the designation Gingiknit, from Van R Dental Product Inc., Oxnard, CA, USA or Retrax^{®}, from Pascal Company, Inc., Bellevue, WA, USA.

Fig. 2 shows capsule 10 of Fig. 1, with the dental retraction cord 11 helically arranged within the reservoir. In the example shown, the dental retraction cord 11 is coiled in a single layer adjacent the inner wall of the reservoir 14. This advantageously helps to prevent the dental retraction cord 11 from becoming tangled in the reservoir as the cord is being dispensed from the capsule.

In another embodiment as shown in Fig. 3, illustrates a capsule 20 having a piston 25. The piston 25 has front and rear ends 25a, 25b and preferably laterally abuts the inner wall of the reservoir 14. The piston has a support structure 29 arranged at the front end 25a on which the dental retraction cord can be coiled. In other words, the piston comprises a coil core for the dental retraction cord. Again, this helps to dispense the dental retraction cord generally trouble-free from the capsule. The support structure 29 and the piston 25 are arranged generally concentrically with one another. In the example, the support structure 29 is a generally cylindrical pin on the outer or lateral surface of which the dental retraction cord is coiled. Any suitable shape may be used for the support structure 29, such as a pin that is tapered towards the front end.

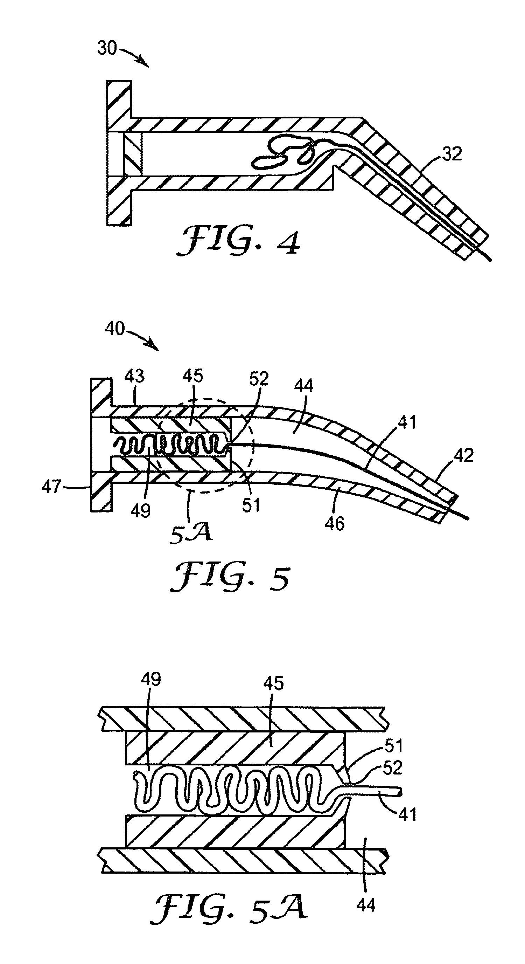

Fig. 4 shows a capsule 30 which has a cannula 32. The cannula 32 has an inner passageway of a generally uniform cross-section over its length. Thereby the relation between the outer dimension of the dental retraction cord and the inner cross-section of the cannula is generally uniform over a certain length. It has been found that increasing the length of the uniform relationship may provide for the dental retraction cord to be entrained at a higher force relative to a shorter length of uniform relationship.

Fig. 5 shows a capsule 40 having a cannula 42 and a container 43. The capsule 40 comprises a reservoir 44 in which a dental substance is contained. The reservoir 44 at a rear end 47 is closed by a piston 45. A dental retraction cord is disposed within the reservoir extending from the rear end 47 through the piston 45 towards a front end 46 of the reservoir. The piston 45 therefore comprises a passageway 52 which allows the dental retraction cord 41 to be fed through. In the example shown the piston 45 comprises a recess 49 that opens toward the rear end 47 of the reservoir, and receives a rear portion of the dental retraction cord, of which the other end extends through the piston 45 into the cannula 42. The piston 45 preferably forms a seal with the dental retraction cord 42. Thus the rear portion of the dental retraction cord 41 is kept separated from the dental substance. Thereby any potential adverse interaction between the dental substance and the dental retraction cord is prevented for the separated portion of the dental retraction cord. For use of the capsule 40 the piston 45 is moved toward the front end 46 of the capsule so that dental substance in the reservoir 44 is extruded through the cannula 42. The dental retraction cord 41 is therefore entrained and moved forward, and thus pull further cord through the piston towards the cannula.

The passageway 52 may have a smaller cross-sectional dimension than the dental retraction cord to provide a seal between the piston 45 and the cord 41. Preferably at least the portion of the piston 45 forming the passageway is elastic, which further helps to provide a seal with the dental retraction cord. Such elastic configuration of the portion around the passageway 52 further facilitates moving the dental retraction cord through the passageway. In more detail relative to Fig. 5 shown in Fig. 5A the portion of the piston 45 forming the passageway is a generally dome shaped elastic wall 51. The dome shaped wall 51 is oriented with its convex end toward the substance contained in the reservoir 44. Therefore advancing the piston 45 results in the dome shaped wall 51 to deform due pressure build up within the dental substance, and thereby to reduce the cross-sectional dimension of the passageway 52. Thus, the seal between the piston 45 and the dental retraction cord 41 is improved as the pressure in the dental substance is increased. This provides a generally leak-free operation of the capsule of this embodiment.

The end of the dental retraction cord initially being in contact with dental substance is a leader portion for the actual dental retraction cord. The leader portion may be of a different material than dental retraction cord. The leader portion may be discarded by a user prior to use of the capsule. Therefore the capsule is used for dispensing a dental substance and a dental retraction cord that have to be kept separate until use.

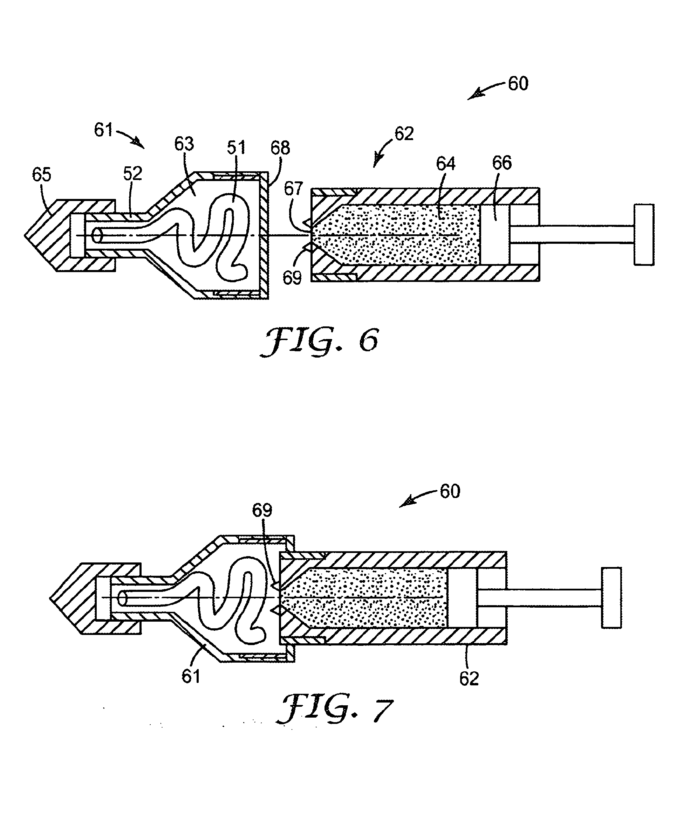

Figs. 6 and 7 show another embodiment of a delivery device 60 for keeping a dental substance and a dental retraction cord separate prior to use. This allows for using a dental retraction cord that is sensitive to ingredients of the dental substance, for example. Referring to Fig. 6, the delivery device 60 comprises a tip part 61 and a delivery part 62. The tip part 61 has a cannula 52 and a cord reservoir 63. The cord reservoir 63 opens into the cannula at a front end and is openably closed at a rear end. A dental retraction cord 51 is disposed in the cord reservoir 63 of the tip part 61. The tip part 61 is closed by a cap 65, so that the cord reservoir 63 is hermetically sealed. For example, the cord reservoir 63 is sealed with a film or foil 68 which can be removed, for example peeled off, or ruptured to open the cord reservoir 63. The cord reservoir 63 comprises the dental retraction cord within a gaseous medium, for example air. Optionally the cord reservoir 63 comprises a component of a dental substance, an astringent and/or hemostatic agent, for example. The delivery part 62 is illustrated by way of example only as a syringe, however, delivery part 62 may also be a capsule as described in other examples in this specification. The delivery part 62 has a reservoir 64 for receiving a dental substance or component of a dental substance. The reservoir 64 has an opening 67 at a front end and is closed at a rear end by a movable piston 66.

Fig. 7 shows the delivery system prepared for use. The delivery portion 62 is combined with the tip portion 61. In the example the delivery portion 62 and the tip portion are screwed together. Thereby the film or foil 68 may be pierced by spikes 69 at the delivery part 62. Such a configuration allows for the use of a multi-dose delivery part multiple times, each time with a new tip part. Further, this configuration is relatively flexible in use, with different tip parts having different cannula configurations and/or different dental retraction cord types stored therein.

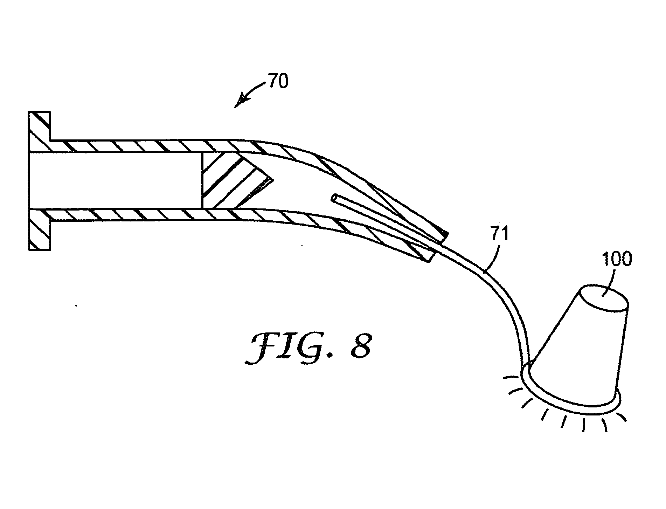

Fig. 8 illustrates a capsule 70 in use for a gingival retraction procedure. A dental retraction cord 71 is dispensed from the capsule 70 and positioned around a tooth 100 in a patient's mouth. The dental retraction cord 71 due to being dispensed along with a dental substance is wetted by the dental substance. This is advantageous because the wetted dental retraction cord sufficiently adheres to the tooth surface so that a dentist can in a first step relatively precisely position the dental retraction cord in place, prior to in a second step pushing the cord into the patient's sulcus. Therefore the dentist first dispenses the dental retraction cord in place, and secondly takes an appropriate dental instrument to push the cord to the desired depth in the sulcus.

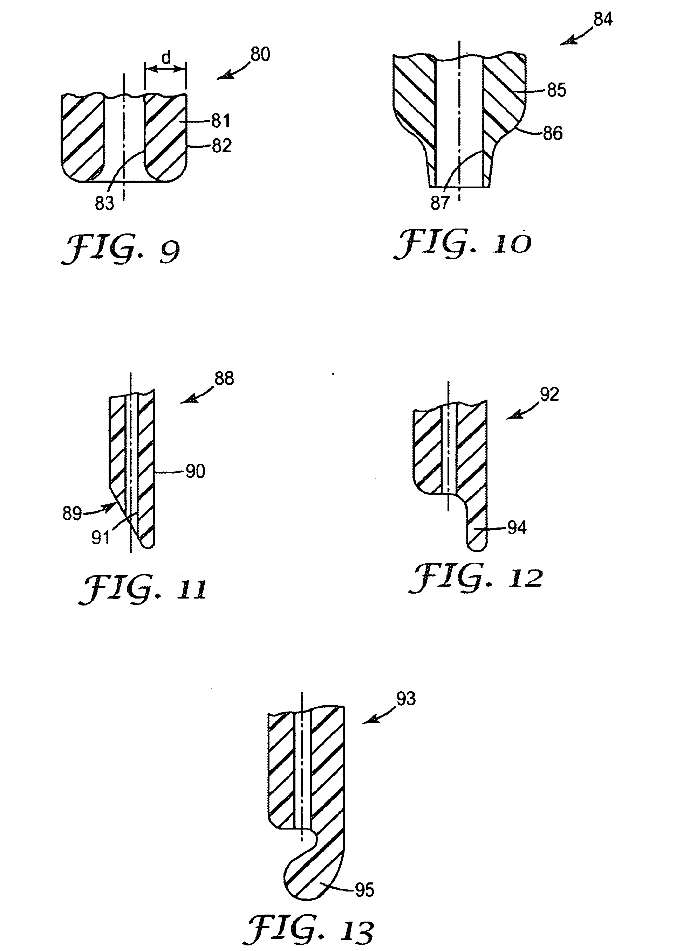

Figs. 9 to 13 show different embodiments of a free end of a cannula as it is used with the present invention. In the embodiment shown in Fig. 9 the wall 81 forming the cannula 80 is rounded at its free end. This means that the outer and inner surfaces 82, 83 of the cannula are connected by a smooth transitional surface at the free end. Preferably such a transitional surface extends between the inner and outer surfaces 82, 83 along a radius that is about ½ of the thickness of the wall 81. This helps to reduce the risk of injury to a patient's gingiva during application of a dental retraction cord.

Fig. 10 shows an embodiment in which a wall 85 of a cannula 84 tapers toward the free end. As shown, the taper preferably results from the outer surface 86 having a reduced diameter toward the free end, with the inner surface 87 extending generally uniformly in cross-section. This makes the free end of the cannula more flexible relative to the remainder of the cannula. Therefore this embodiment helps to reduce the risk of injury to a patient's gingiva during application of a dental retraction cord. Further such a cannula is suitable for accessing small spaces, for example between two teeth. It is also possible that the outer surface 86 constricts, and the inner surface 87 widens toward the free end, or that the inner surface 87 widens, with the outer surface 86 extending generally uniform in cross-section. Thereby the flexibility of the free end is achieved in any manner, although the dental retraction cord is not guided within the free end in certain embodiments. This facilitates the dental retraction cord to be smoothly placed around curved surfaces with the free end of the cannula, and thus helps to avoid sharp bends which might adversely affect the dental retraction cord.

Fig. 11 shows a cannula 88 having a free end forming a beveled front face. The transitions between the front face and the inner and outer surfaces 90, 91 of the cannula are rounded, to avoid injury to a patient's gingiva in use of the cannula. The beveled front face 89 is advantageous in inserting the front of the cannula into the sulcus as the rounded narrow end can be easily pushed in the sulcus which is subsequently wided up by further pushing the beveled part into the sulcus. In this procedure the beveled part can be guided at the tooth surface in order to have better control of the motion of the cannula.

Fig. 12 and Fig. 13 show cannulas 92, 93 each having a rounded protrusion 94, 95 at their free end. The protrusion 94, 95 are used to push a pre-positioned dental retraction cord into the sulcus. Thus a dentist, in a first step, pre-positions the dental retraction cord to a patient's tooth, and without changing to a dental instrument pushing the cord into the sulcus by use of the protrusions. Therefore the dentist saves the time to change between the cord dispensing device and a dental instrument in a dental retraction procedure. The protrusion 94, 95 are differently shaped so as to provide flexibility to match different situations in a patient's mouth.

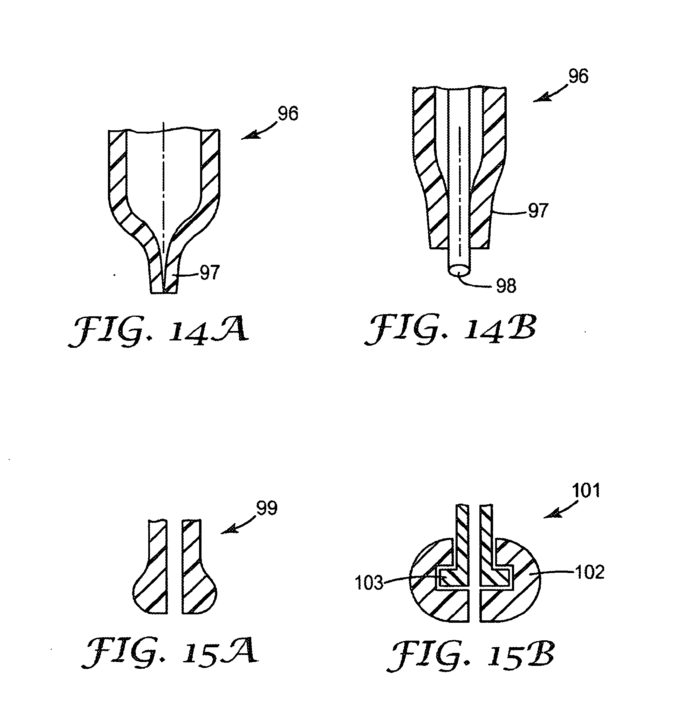

Fig. 14A and 14B illustrate a cannula 96 having an elastic free end. As shown in Fig. 14A the cannula 96 is initially closed due to the wall 97 being constricted toward the free end of the cannula 96. In contrast Fig. 14B shows the elastic free end expanded due to a dental retraction cord 98 forced through the constriction and thus displacing the wall 97. This helps to initially close cannula during storage. For example, a reservoir opening into the cannula, as described in some embodiments of the invention, is thus closed without the use of a separate part. The constricted free end due to its relatively small dimension is further insertable into the sulcus relatively easily. Once inserted the free end is expanded due to dental retraction cord being forced through, which provides for mechanically opening the sulcus. Consequently the insertion of the dental retraction cord is facilitated.

Preferably a cannula as it is used with the present invention, has at least adjacent the free end an inner diameter which is smaller than 1 mm, more preferably an inner diameter of about between 0.2 mm and 0.75 mm. A preferred outer diameter of the cannula at least adjacent the free end is smaller than 3 mm, preferably between about 1.5 mm to about 2 mm.

Fig. 15A shows a cannula 99 having a generally ball-shaped free end. The ball-shaped free end allows for the cannula to be inserted in the gingival sulcus in a patient's mouth. Because of the ball shape, the cannula 99 inserted in the gingival sulcus is slightly retained in the sulcus. Thereby a reliable guide system for the cannula is achieved. In Fig. 15B a cannula 101 is shown which has a separate ball-shaped free end 102 joined at the free end 103 of the cannula. The separate free end 102 is for example, snapped on the free end 103 of the cannula 101. Thus, the separate free end 102 is rotatable on the cannula. Thereby the separate free end 102 is allowed to rotate during it is guided into and along the sulcus of a patient. This provides for a relatively gentle interaction between the separate free end 102 and the gingival tissue of the patient. Furthermore, the separate free end 102 may be made from a material that is different from the material the cannula 101 is made of. For example the cannula 101 is made from a generally rigid material (for example steel), but separate free end 102 is made of a softer material like plastic or rubber, for example. This allows for relatively precise guidance of the cannula, and further for relatively gentle treatment of the gingival tissue of the patient.

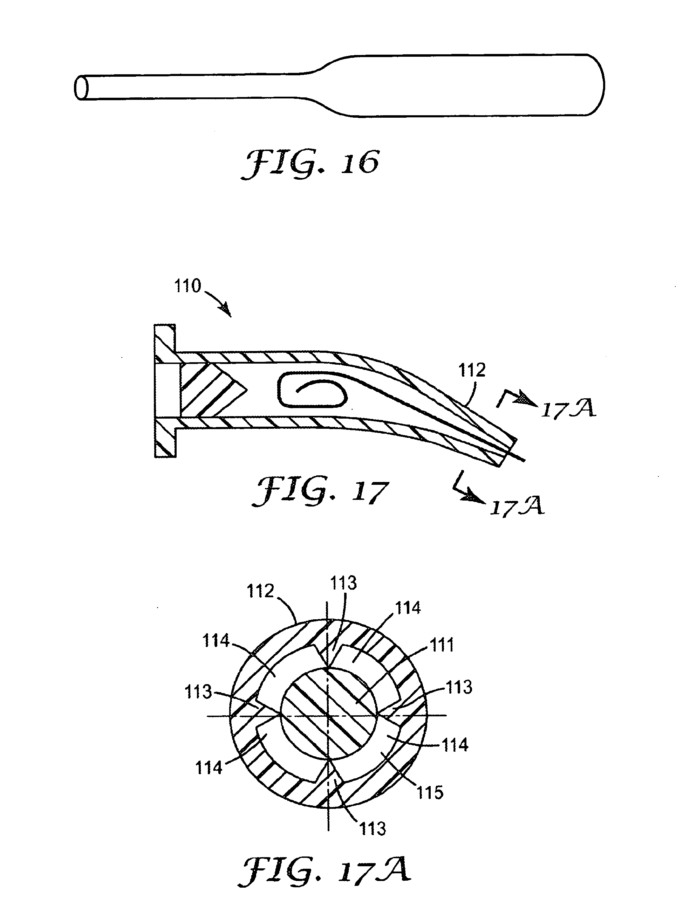

Fig. 16 shows a dental retraction cord having different cross-sectional dimensions. For example, a leading portion (first dispensed from a device for supplying a dental retraction cord) has a smaller diameter than trailing portions. This facilitates insertion of the leading end into a sulcus in a patient's mouth.

Fig. 17A is a sectional view showing the inner cross-section of a cannula 112 of a device 110 according to the invention as depicted in Fig. 17. A dental retraction cord 111 is disposed in the cannula 112. Thus the dental retraction cord is entrained by dental substance dispensed through the cannula. Ridges 113 that are preferably arranged longitudinally (in the direction the dental retraction cord may be entrained) within a passageway 115 of the cannula 112 to guide the dental retraction cord 111. Therefore the dental retraction cord is restrained generally centrically or along any other suitable path within the passageway 115. Further channels 114 are formed between ridges 113, the dental retraction cord, and inner walls of the cannula 112. Such channels provide for dental substance that is forced through the cannula to pass and thereby to circumferentially engage or entrain the dental retraction cord 111. Therefore the dental retraction cord is reliably entrained when the dental substance is dispensed. Further the dental retraction cord is wetted generally circumferentially by the dental substance, and is thus prevented from curling as it is extruded from the cannula. Preferably the cannula comprises at least 3 ridges, for example 4 ridges as shown in Fig. 17A, that are preferably generally evenly distributed around the interior circumference of the cannula.

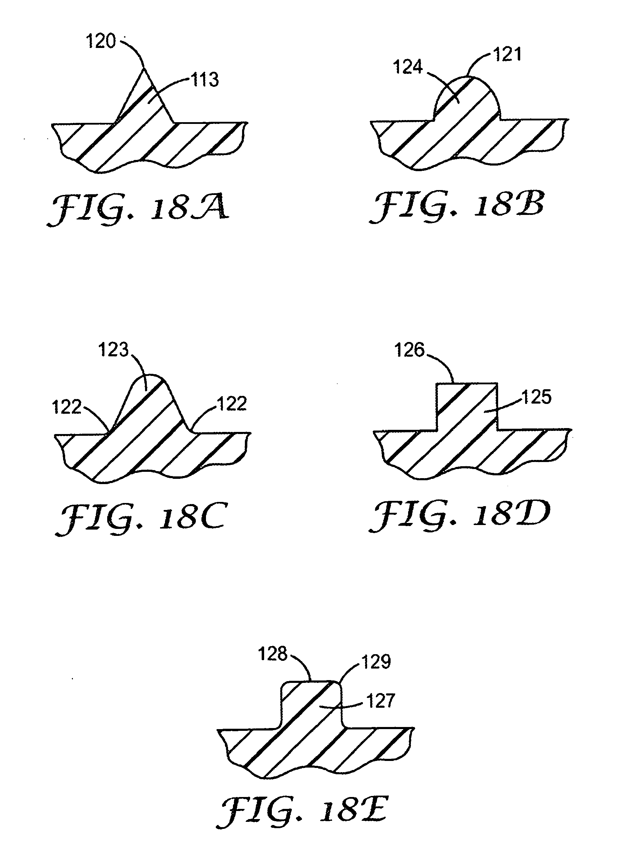

Figs. 18A throughout 18E show cross-sections of differently shaped ridges as they are used with certain embodiments of the invention. Fig. 18A generally corresponds to the ridges 113 as shown in Fig. 17A. The ridge 113 has a top 120 forming a relatively sharp edge. Therefore the ridge 113 forms a line contact with the dental retraction cord, and thus provides relatively good guidance of the dental retraction cord. Fig. 18B shows a ridge 124 having a more rounded top 121. This helps to minimize friction between the cord and the ridge so that the free movability dental retraction cord is facilitated. Fig. 18C indicates radii at the base 122 of a ridge 123. Such radii are used to provide channels (similar as for example channels 114 in Fig. 17A) with a certain cross-section. The cross-section of the channels is determined according to the properties of a dental substance, for example the viscosity. For example, a dental substance having a higher viscosity requires channels of a greater cross-section to provide acceptable low forced for being dispensed through, whereas channels of a narrower cross-section are needed to provide a good traction between a lower viscosity dental substance and the cord. Fig. 18D shows a ridge 125 having a generally flat top 126, and Fig. 18E shows a ridge 128 having a generally flat top 128 and rounded edges 129. Other shapes may be used as appropriate to provide an optimum of relatively good guidance but generally free movability of the cord, or good traction of the cord but low forces to dispense the dental substance.

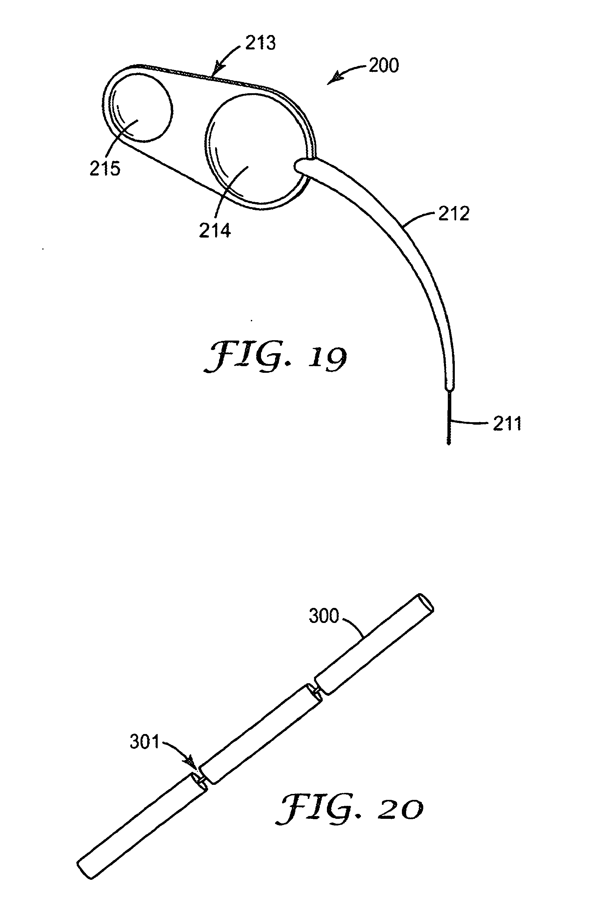

Fig. 19 shows a device according to an alternative embodiment of the invention. A package 200 is shown having a cannula 212 and a container 213. A dental retraction cord 211 is disposed in a first compartment 214 of the container 213 with one end extending through the cannula 212. A part of the dental retraction cord 211 projects from the cannula 212. The device in the example has a second compartment 215 which contains the dental substance. The dental retraction cord is stored separate from the dental substance, for example in case the dental retraction cord is not inherent to ingredients of the dental substance. In another example each of the compartments 214, 215 comprise a component which in combination can form the dental substance. In this case the cord containing compartment 214 coutains a component substantially without ingredients that affect the dental retraction cord.

The container 213 in the example is formed by two layers or sheets that are interconnected in certain areas to form the compartments between other areas that are unconnected. One or both of the layers at the compartment forming unconnected areas are bulged out to provide a space in which the dental substance may be received. The interconnected areas have permanently and non-permanently interconnected areas. The layers, when forced apart, are thus preferably adapted to separate in such non-permanently interconnected areas, but not in the permanently interconnected areas. Preferably such a non-permanently interconnected area extends between the compartments 214 and 215 to form an openably closed passage. Thus a dental substance contained in the compartment 215 is pressurized to force the passage open, so as to establish a fluid connection between the compartments 214 and 215. Another passage is also arranged between the compartment 214 and the cannula 212. For pressurizing the dental substance a finger force is applied to the device which is preferably in a range of 5 N to 70 N, preferably in a range of 15 N to 50 N. The layers are generally interconnected by heat sealing. Different bond strengths for creating permanent and the non-permanent interconnections between the layers are achieved by using different temperatures and/or different sealing durations. The cannula 212 may be formed by the layers. The cannula 212 may further be a separate part which is attached to the container 213.

Fig. 20 shows a dental retraction cord 300 having predetermined separation areas 301. The dental retraction cord 300 in the example is made of an elastic plastic material, for example silicone. The predetermined separation areas 301 are formed by constrictions or by cuts formed in the cord. Thereby a user may separate portions of the dental retraction cord as required without the use of a tool.

## Claims

1. A device (10, 20, 30, 40, 60, 70, 110, 200) for supplying a dental retraction cord (11, 21, 41, 51, 71, 211), the device comprising a container (14, 44, 64, 215), which comprises a dental substance, a cannula (12, 32, 52, 80, 84, 88, 92, 93, 96, 99, 101, 112, 212) for dispensing the dental substance, and a dental retraction cord (11, 21, 41, 51, 71, 211) being at least partially disposed within the cannula (12, 32, 52, 80, 84, 88; 92, 93, 96, 99, 101, 112, 212) so that the dental retraction cord (11 , 21 , 41 , 51, 71, 211) is entrained by the dental substance dispensed through the cannula (12, 32, 52, 80, 84, 88, 92, 93, 96, 99, 101, 112, 212).

2. The device of claim 1, wherein the container (14, 44, 64,215) and the cannula (12, 32, 52, 80, 84, 88, 92, 93, 98, 99, 901, 112, 212) are connectable and wherein the device (10, 20, 30, 40, 60, 70, 110, 200) is adapted to force the dental substance from the container (14, 44, 64, 215) towards the cannula (12, 32, 52, 80, 84, 88, 92, 93, 98, 99, 101, 112, 212).

3. The device of claim 2, wherein the cannula (12, 32, 80, 84, 88, 92, 93, 96, 99, 101, 112) and the container (14, 44 215) are formed as one piece.

4. The device of claim 2 or 3, further comprising a piston (15, 25, 45, 66) which is movable into the container (14, 44, 64, 215) to extrude the dental substance from the container (14, 44, 64, 215).

5. The device of any of the preceding claims, wherein the cannula (12, 32, 52, 80, 84, 88, 92, 93, 96, 99, 101, 112, 212) has a free end formed by a cannula wall which is seduced in thickness relative to an adjacent portion of the cannula (12, 32, 52, 80, 84, 88, 92, 93, 96, 99, 101, 112, 212), to provide flexibility of the free end relative to the remainder of the cannula (12, 32, 52, 80, 84, 88, 92, 93, 96, 99, 101, 112, 212).

6. The device of any of the preceding claims, wherein the cannula (12, 32, 52, 80, 84, 88, 92, 93, 96, 99, 101, 112, 212) has a front face which transitions smoothly towards lateral inside and outside surfaces of the cannula (12, 32, 52, 80, 84, 88, 92, 93, 96, 99, 101, 112, 212).

7. The device of any of the preceding claims, wherein the cannula (84, 88, 92, 93, 96, 99, 101) has a free end having at least one of:
- a protrusion (94, 95) for insertion of a dental retraction cord into a patient's gingival sulcus,
- a front face beveled with respect to major lateral surfaces of the cannula,
- a generally ball shaped configuration (102),
- an elastic free end (97) initially closed by constriction of the cannula wall, and expandable by forcing the dental retraction cord (98) through the constriction;
and wherein the cannula (84, 88, 92, 93, 96. 99, 101), at least at its free end, is comprised of a plastic material selected from the group of polypropylene, polyethylene, polyamide, polycarbonate, polymethyl methacrylate, polyoxymethylene, acrylonitrile butadiene styrene-terpolymer, polybutadiene terephthalate, polyethylene terephthalate, polyisoprene and blends thereof, with the plastic materials being optionally fibre or particle reinforced.

8. The device of any of the preceding claims, wherein the dental retraction cord (11, 21, 41, 51,71, 211) is laterally to its length greater in dimension than at least an outlet of the cannula (12, 32, 52, 80, 84, 88, 92, 93, 96, 99, 101, 112, 212).

9. The device of any of the preceding claims, wherein the dental retraction cord (11, 21, 41, 51, 71, 211) is comprised of at least one of cotton, thermoplastic polyurethane, and silicone.

10. The device of any of the preceding claims, wherein one part of the dental retraction cord (11, 21, 41, 51, 71, 211) is accommodated in the container (14, 44, 64, 215) with another part extending into the cannula (12, 32, 52, 80, 84, 88, 92, 93, 96, 99, 101, 12, 212).

11. The device of any of the claims 4 to 10, wherein the dental retraction cord (11, 21, 41, 51, 71, 211) is one of:
- helically coiled around the piston (25),
- helically coiled adjacent inner walls of the container (14, 44, 64, 215), and
- disposed arbitrarily within the container (14, 44, 64, 215) without touching the piston.

12. The device of any of the claims 4 to 10, wherein the dental retraction cord (11, 21, 41, 51, 71, 211) is fed through the piston (45), with the piston (45) spacing a portion of the dental retraction cord (11, 21, 41, 51, 71, 211) from an inside wall of the container (14, 44, 64, 215).

13. The device of any of the preceding claims, wherein the dental substance is adapted to solidify.

14. The device of any of the preceding claims, wherein the dental retraction cord (11, 21, 41, 51, 71, 211) is substantially inert relative to the dental substance.

15. The device of any of the preceding claims, wherein the dental substance comprises at least one of sodium alginate, calcium alginate, potassic alginate, and hydrogel.

## Patentansprüche

1. Vorrichtung (10, 20, 30, 40, 60, 70, 110, 200) zum Zuführen eines Zahnretraktionsfadens (11, 21, 41, 51, 71, 211), wobei die Vorrichtung einen Behälter (14, 44, 64, 215) umfasst, der eine Dentalsubstanz, eine Kanüle (12, 32, 52, 80, 84, 88, 92, 93, 96, 99, 101, 112, 212) zum Abgeben der Dentalsubstanz und einen Zahnretraktionsfaden (11, 21, 41, 51, 71, 211) umfasst, der zumindest teilweise innerhalb der Kanüle (12, 32, 52, 80, 84, 88, 92, 93, 96, 99, 101, 112, 212) angeordnet ist, so dass der Zahnretraktionsfaden (11, 21, 41, 51, 71, 211) von der Dentalsubstanz mitgeführt ist, die durch die Kanüle (12, 32, 52, 80, 84, 88, 92, 93, 96, 99, 101, 112, 212) abgegeben ist.

2. Vorrichtung nach Anspruch 1, wobei der Behälter (14, 44, 64, 215) und die Kanüle (12, 32, 52, 80, 84, 88, 92, 93, 96, 99, 101, 112, 212) miteinander verbunden werden können und wobei die Vorrichtung (10, 20, 30, 40, 60, 70, 110, 200) dafür ausgelegt ist, die Dentalsubstanz aus dem Behälter (14, 44, 64, 215) in die Kanüle (12, 32, 52, 80, 84, 88, 92, 93, 96, 99, 101, 112, 212) zu drücken.

3. Vorrichtung nach Anspruch 2, wobei die Kanüle (12, 32, 80, 84, 88, 92, 93, 96, 99, 101, 112) und der Behälter (14, 44, 215) aus einem Stück gebildet sind.

4. Vorrichtung nach Anspruch 2 oder 3, die ferner einen Kolben (15, 25, 45, 66) umfasst, der in den Behälter (14, 44, 64, 215) bewegt werden kann, um die Dentalsubstanz aus dem Behälter (14, 44, 64, 215) zu drängen.

5. Vorrichtung nach einem der vorherigen Ansprüche, wobei die Kanüle (12, 32, 52, 80, 84, 88, 92, 93, 96, 99, 101, 112, 212) ein freies Ende hat, das durch eine Kanülenwand gebildet ist, welche gegenüber einem benachbarten Abschnitt der Kanüle (12, 32, 52, 80, 84, 88, 92, 93, 96, 99, 101, 112, 212) eine reduzierte Dicke hat, um für Flexibilität des freien Endes gegenüber dem Rest der Kanüle (12, 32, 52, 80, 84, 88, 92, 93, 96, 99, 101, 112, 212) zu sorgen.

6. Vorrichtung nach einem der vorherigen Ansprüche, wobei die Kanüle (12, 32, 52, 80, 84, 88, 92, 93, 96, 99, 101, 112, 212) eine Vorderfläche hat, die nahtlos in die seitlichen Innen- und Außenflächen der Kanüle (12, 32, 52, 80, 84, 88, 92, 93, 96, 99, 101, 112, 212) übergeht.

7. Vorrichtung nach einem der vorherigen Ansprüche, wobei die Kanüle (84, 88, 92, 93, 96, 99, 101) ein freies Ende hat, das mindestens eines der folgenden Elemente hat:
- einen Vorsprung (94, 95) zum Einführen eines Zahnretraktionsfadens in den Sulcus gingivalis eines Patienten,
- eine Vorderfläche, die gegenüber den Hauptseitenflächen der Kanüle abgeschrägt ist,
- eine im Allgemeinen kugelförmige Konfiguration (102),
- ein elastisches freies Ende (97), das anfänglich durch Einengung der Kanülenwand geschlossen ist und durch Erzwingen des Durchgangs des Zahnretraktionsfadens (98) durch die Einengung erweiterbar ist; und wobei die Kanüle (84, 88, 92, 93, 96, 99, 101) zumindest an ihrem freien Ende aus einem Kunststoffmaterial besteht, aus der Gruppe bestehend aus Polypropylen, Polyethylen, Polyamid, Polycarbonat, Polymethylmethacrylat, Polyoxymethylen, Acrylnitrilbutadienstyren-Terpolymer, Polybutadienterephthalat, Polyethylenterephthalat, Polyisopren und Mischungen derselben ausgewählt, wobei die Kunststoffmaterialien optional faser- oder teilchenverstärkt sind.

8. Vorrichtung nach einem der vorherigen Ansprüche, wobei der Zahnretraktionsfaden (11, 21, 41, 51, 71, 211) seitlich von seiner Länge größer in den Abmessungen als mindestens ein Auslass der Kanüle (12, 32, 52, 80, 84, 88, 92, 93, 96, 99, 101, 112, 212) ist.

9. Vorrichtung nach einem der vorherigen Ansprüche, wobei der Zahnretraktionsfaden (11, 21, 41, 51, 71, 211) aus mindestens einem Element aus Baumwolle, thermoplastischem Polyurethan und Silikon besteht.

10. Vorrichtung nach einem der vorherigen Ansprüche, wobei ein Teil des Zahnretraktionsfadens (11, 21, 41, 51, 71, 211) im Behälter (14, 44, 64, 215) untergebracht ist, wobei ein weiterer Teil sich in die Kanüle (12, 32, 52, 80, 84, 88, 92, 93, 96, 99, 101, 112, 212) hinein erstreckt.

11. Vorrichtung nach einem der Ansprüche 4 bis 10, wobei der Zahnretraktionsfaden (11,21,41,51,71,211) eins von Folgenden ist:
- schraubenförmig um den Kolben (25) gewickelt,
- schraubenförmig um benachbarte Innenwände des Behälters (14, 44, 64, 215) gewickelt, und
- beliebig im Behälter (14, 44, 64, 215) angeordnet, ohne den Kolben zu berühren.

12. Vorrichtung nach einem der Ansprüche 4 bis 10, wobei der Zahnretraktionsfaden (11, 21, 41, 51, 71, 211) durch den Kolben (45) zugeführt wird, wobei der Kolben (45) einen Abschnitt des Zahnretraktionsfadens (11, 21, 41, 51, 71, 211) mit Abstand von einer Innenwand des Behälters (14, 44, 64, 215) führt.

13. Vorrichtung nach einem der vorherigen Ansprüche, wobei die Dentalsubstanz zum Erstarren ausgelegt ist.

14. Vorrichtung nach einem der vorherigen Ansprüche, wobei der Zahnretraktionsfaden (11, 21, 41, 51, 71, 211) gegenüber der Dentalsubstanz im Wesentlichen inert ist.

15. Vorrichtung nach einem der vorherigen Ansprüche, wobei die Dentalsubstanz mindestens eine aus Natriumalginat, Kalziumalginat, Kaliumalginat und Hydrogel umfasst.

## Revendications

1. Dispositif (10, 20, 30, 40, 60, 70, 110, 200) qui délivre un câble (11, 21, 41, 51, 71, 211) de rétraction dentaire, le dispositif comprenant
un récipient (14, 44, 64, 215) qui contient une substance dentaire,
une canule (12, 32, 52, 80, 84, 88, 92, 93, 96, 99, 101, 112, 212) qui délivre la substance dentaire et
un câble (11, 21, 41, 51, 71, 211) de rétraction dentaire disposé au moins en partie dans la canule (12, 32, 52, 80, 84, 88, 92, 93, 96, 99, 101, 112, 212) de telle sorte que le câble (11,21,41,51,71,211) de rétraction dentaire soit entraîné par la substance dentaire délivrée à travers la canule (12, 32, 52, 80, 84, 88, 92, 93, 96, 99, 101, 112, 212).

2. Dispositif selon la revendication 1, dans lequel le récipient (14, 44, 64, 215) et la canule (12, 32, 52, 80, 84, 88, 92, 93, 96, 99, 101, 112, 212) peuvent être reliés l'un à l'autre, le dispositif (10, 20, 30, 40, 60, 70, 110, 200) étant adapté pour refouler la substance dentaire hors du récipient (14, 44, 64, 215) en direction de la canule (12, 32, 52, 80, 84, 88, 92, 93, 96, 99, 101, 112, 212).

3. Dispositif selon la revendication 2, dans lequel la canule (12, 32, 80, 84, 88, 92, 93, 96, 99, 101, 112) et le récipient (14, 44, 215) sont formés d'un seul tenant.

4. Dispositif selon la revendication 2 ou 3, comprenant en outre un piston (15, 25, 45, 66) apte à se déplacer dans le récipient (14, 44, 64, 215) en vue d'extruder la substance dentaire hors du récipient (14, 44, 64, 215).

5. Dispositif selon l'une quelconque des revendications précédentes, dans lequel la canule (12, 32, 52, 80, 84, 88, 92, 93, 96, 99, 101, 112, 212) présente une extrémité libre formée par une paroi de canule d'épaisseur plus petite que celle d'une partie adjacente de la canule (12, 32, 52, 80, 84, 88, 92, 93, 96, 99, 101, 112, 212) de manière à donner de la souplesse à l'extrémité libre par rapport au reste de la canule (12, 32, 52, 80, 84, 88, 92, 93, 96, 99, 101, 112, 212).

6. Dispositif selon l'une quelconque des revendications précédentes, dans lequel la canule (12, 32, 52, 80, 84, 88, 92, 93, 96, 99, 101, 112, 212) présente une face avant qui se prolonge progressivement en direction de la surface latérale intérieure et de la surface latérale extérieure de la canule (12, 32, 52, 80, 84, 88, 92, 93, 96, 99, 101, 112, 212).

7. Dispositif selon l'une quelconque des revendications précédentes, dans lequel la canule (84, 88, 92, 93, 96, 99, 101) possède une extrémité libre qui présente :
- une saillie (94, 95) permettant d'insérer un câble de rétraction dentaire dans le sulcus gingival du patient,
- une face frontale biseautée par rapport aux surfaces latérales principales de la canule,
- une configuration (102) globalement en forme de bille et/ou
- une extrémité libre élastique (97) initialement fermée par un rétrécissement de la paroi de la canule et qui peut être dilatée en refoulant le câble de rétraction (98) dentaire à travers le rétrécissement,
la canule (84, 88, 92, 93, 96, 99, 101) et au moins son extrémité libre étant constituées d'une matière plastique sélectionnée dans l'ensemble formé du polypropylène, du polyéthylène, du polyamide, du polycarbonate, du poly(méthacrylate de méthyle), du polyoxyméthylène, des terpolymères d'acrylonitrile, de butadiène et de styrène, du poly(téréphtalate de butadiène), du poly(téréphtalate d'éthylène), du polyisoprène et de leurs mélanges, les matières plastiques étant facultativement renforcées par des fibres ou par des particules.

8. Dispositif selon l'une quelconque des revendications précédentes, dans lequel le câble (11, 21, 41, 51, 71, 211) de rétraction dentaire présente, dans la direction latérale par rapport à sa longueur, une dimension plus grande qu'au moins une sortie de la canule (12, 32, 52, 80, 84, 88, 92, 93, 96, 99, 101, 112, 212).

9. Dispositif selon l'une quelconque des revendications précédentes, dans lequel le câble (11, 21, 41, 51, 71, 211) de rétraction dentaire est constitué de coton, de polyuréthane thermoplastique et/ou de silicone.

10. Dispositif selon l'une quelconque des revendications précédentes, dans lequel une partie du câble (11, 21, 41, 51, 71, 211) de rétraction dentaire est logée dans le récipient (14, 44, 64, 215), une autre partie s'étendant dans la canule (12, 32, 52, 80, 84, 88, 92, 93, 96, 99, 101, 112, 212).

11. Dispositif selon l'une quelconque des revendications 4 à 10, dans lequel le câble de rétraction dentaire (11, 21, 41, 51, 71, 211) est :
- enroulé en hélice autour du piston (25),
- enroulé en hélice en position adjacente aux parois intérieures du récipient (14, 44, 64, 215) ou
- disposé arbitrairement à l'intérieur du récipient (14, 44, 64, 215), sans toucher le piston.

12. Dispositif selon l'une quelconque des revendications 4 à 10, dans lequel le câble (11, 21, 41, 51, 71, 211) de rétraction dentaire est avancé à travers le piston (45), le piston (45) écartant une partie du câble (11, 21, 41, 51, 71, 211) de rétraction dentaire de la paroi intérieure du récipient (14, 44, 64, 215).

13. Dispositif selon l'une quelconque des revendications précédentes, dans lequel la substance dentaire est adaptée de manière à se solidifier.

14. Dispositif selon l'une quelconque des revendications précédentes, dans lequel le câble de rétraction dentaire (11, 21, 41, 51, 71, 211) est essentiellement inerte vis-à-vis de la substance dentaire.

15. Dispositif selon l'une quelconque des revendications précédentes, dans lequel la substance dentaire contient de l'alginate de sodium, de l'alginate de calcium, de l'alginate de potassium et/ou de l'hydrogel.
